# EUROPÄISCHE PATENTSCHRIFT

(11) **EP 3 649 521 B1**
(45) Veröffentlichungstag und Bekanntmachung des Hinweises auf die Patenterteilung: **16.03.2022**
(21) Anmeldenummer: 18732678.0
(22) Anmeldetag: 04.06.2018
(51) Int. Cl.: G05D 1/02, G01C 21/32

(54) **VERFAHREN ZUM BETREIBEN EINES HÖHER AUTOMATISIERTEN FAHRZEUGS (HAF), INSBESONDERE EINES HOCHAUTOMATISIERTEN FAHRZEUGS**
METHOD FOR OPERATING A MORE HIGHLY AUTOMATED VEHICLE (HAF), IN PARTICULAR A HIGHLY AUTOMATED VEHICLE
PROCÉDÉ POUR FAIRE FONCTIONNER UN VÉHICULE TRÈS AUTOMATISÉ, EN PARTICULIER UN VÉHICULE FORTEMENT AUTOMATISÉ

(30) Priorität: 07.07.2017 DE 102017211632
(43) Veröffentlichungstag der Anmeldung: 13.05.2020
(73) Patentinhaber: Robert Bosch GmbH, 70442 Stuttgart (DE)
(72) Erfinder: HASBERG, Carsten, 74360 Ilsfeld-Auenstein (DE); RASP, Philipp, 72827 Wannweil (DE); HIENDRIANA, Danny, 71636 Ludwigsburg (DE); FROMMHERZ, Valentin, 74076 Heilbronn (DE); ALAWIEH, Ali, 74232 Abstatt (DE); REISTER, Fabian Dominik, 75378 Bad Liebenzell (DE); KHAN, Muhammad Sheraz, 74074 Heilbronn (DE); PAULS, Jan-Hendrik, 71723 Grossbottwar (DE)
(86) Internationale Anmeldenummer: PCT/EP2018/064615
(87) Internationale Veröffentlichungsnummer: WO 2019/007602

(56) Entgegenhaltungen:
- EP-A2- 1 045 224
- DE-A1-102011 116 245
- DE-A1-102012 212 740

## Beschreibung

Die Erfindung betrifft ein Verfahren zum Betreiben eines höher automatisierten Fahrzeugs (HAF), insbesondere eines hochautomatisierten Fahrzeugs und ein Fahrerassistenzsystem zur Steuerung eines höher automatisierten Fahrzeugs (HAF), insbesondere eines hochautomatisierten Fahrzeugs.

### Stand der Technik

Angesichts einer Zunahme des Automatisierungsgrades von Fahrzeugen werden immer komplexere Fahrerassistenzsysteme eingesetzt. Für solche Fahrerassistenzsysteme und Funktionen, wie z.B. dem hochautomatisierten Fahren oder dem vollautomatisiertem Fahren, wird eine große Zahl von Sensoren im Fahrzeug benötigt, die eine exakte Erfassung des Fahrzeugumfelds ermöglichen.

Im Folgenden werden unter höher automatisiert all diejenigen Automatisierungsgrade verstanden, die im Sinne der Bundesanstalt für Straßenwesen (BASt) eine automatisierte Längs- und Querführung mit steigender Systemverantwortung entsprechen, z.B. das hoch- und vollautomatisierte Fahren.

Im Stand der Technik ist eine Vielzahl von Möglichkeiten offenbart, ein Verfahren zum Betreiben eines hochautomatisierten Fahrzeugs (HAF) durchzuführen. Um dabei die Lokalisierung eines hochautomatisierten Fahrzeugs (HAF) in einer digitalen Karte zu erhöhen, ist es erforderlich, die Genauigkeit der digitalen Karte garantieren zu können, wobei hier das Problem auftritt, dass kurzfristige Streckenänderungen, die beispielsweise durch Baustellen, Unfälle oder andersartige Umstände bedingt sind, nicht oder nur unvollständig in digitalen Karten berücksichtigt werden können oder derart kurzfristig auftreten, dass ein höher automatisiertes Fahrzeug (HAF), insbesondere ein hochautomatisiertes Fahrzeug, über diese kurzfristigen Änderungen nicht schnell genug verfügen kann und die Steuerung des Fahrzeugs dem Fahrer überlassen werden muss. Dies kann unerwünscht und gegebenenfalls auch kritisch hinsichtlich der Verkehrssicherheit sein.

Um das Fahrzeug in möglichst allen Situationen höher automatisiert zu steuern, ist es notwendig, eine weitestgehend fehlerfreie und der Wirklichkeit entsprechende digitale Karte zur Verfügung zu haben.

EP 1045224 A2 offenbart ein Verfahren zur Aktualisierung einer Verkehrswegenetzkarte und kartengestütztes Verfahren zur Fahrzeugführungsinformationserzeugung, bei dem durch mindestens ein Probefahrzeug aktuelle Strecken- und Attributdaten vom jeweils befahrenen Streckenabschnitt aufgenommen werden und die Verkehrswegenetzkarte anhand dieser aufgenommenen Daten aktualisiert wird.

Es ist bekannt, dass anhand von verschiedenen Umfeldsensoren, wie beispielsweise Radarsensoren, Kameras, Fahrdynamiksensoren, GPS (Global Positioning System) und digitalen Karten eine Repräsentation der Fahrzeugumgebung, das sogenannte Umfeldmodell, aufgebaut werden kann, wobei durch einen Vergleich der Sensordaten bzw. des Umfeldmodells mit der digitalen Karte die Aktualität einer digitalen Karte validiert und gegebenenfalls erhöht werden kann. Weisen Umfeldmodell und digitale Karte nennenswerte Abweichungen auf, ist davon auszugehen, dass die Karte nicht auf dem aktuellen Stand ist und nur noch eingeschränkt verwendet werden kann.

Als problematisch ist in diesem Zusammenhang jedoch anzusehen, dass die Auflösung gängiger Sensoren in der Ferne in der Regel gering ist und die zu erkennenden Streckenänderungen oft klein, sodass Streckenänderungen unter Umständen nicht rechtzeitig erkannt werden und sicherheitskritische Situationen auftreten.

Aus EP 1 045 224 A2 ist ein Verfahren zur Aktualisierung einer datenverwaltungsgestützten Verkehrswegenetzkarte bekannt, die Streckendaten über ein befahrbares Verkehrswegenetz und zugeordnete Attributdaten enthält, bei dem durch mindestens ein Probefahrzeug aktuelle Strecken- und Attributdaten vom jeweils befahrenen Streckenabschnitt aufgenommen werden und die Verkehrswegenetzkarte anhand dieser aufgenommenen Daten aktualisiert wird. Zudem wird ein Verfahren zur Erzeugung von Fahrzeugführungsinformationen bereitgestellt, bei dem die momentane Fahrzeugposition bestimmt wird, diesbezüglich Daten aus einer Attributdaten enthaltenden Verkehrswegenetzkarte ausgelesen und davon abhängig Fahrzeugführungsinformationen erzeugt werden. Dabei wird ein aktuell befahrener Streckenabschnitt in der digitalen Karte identifiziert. Zudem werden Vergleichstrajektorien wenigstens eines weiteren Fahrzeuges entlang des aktuell befahrenen Streckenabschnittes zur Verfügung gestellt.

Aus DE 10 2012 212 740 A1 ist ein System und ein Verfahren zum Aktualisieren einer digitalen Karte eines Fahrerassistenzsystems bekannt. Es ist eine digitale Karte mit Attributen zur Charakterisierung von Teilbereichen eines durch die digitale Karte abgebildeten Gesamtbereichs vorgesehen. Zudem sind eine Basisstation und mehrere jeweils mit einem Fahrerassistenzsystem ausgestattete Fahrzeuge vorgesehen, wobei die Basisstation mindestens eine Sendeeinheit zum Senden von aktualisierten Kartendaten mit aktualisierten Attributen an die Fahrerassistenzsysteme aufweist, wobei jedes der Fahrerassistenzsysteme eine Speichereinheit zum Speichern von Kartendaten zumindest eines Teils der digitalen Karte, eine Empfängereinheit zum Empfangen der von der Basisstation gesendeten aktualisierten Kartendaten und eine Steuereinheit zum Aktualisieren der gespeicherten Kartendaten unter Verwendung der empfangenen aktualisierten Kartendaten aufweist. Jedes der Fahrerassistenzsysteme weist eine Ortsbestimmungseinheit zum Ermitteln von Koordinaten des Fahrzeugs sowie eine Sendeeinheit zum Senden der Koordinaten des Fahrzeugs an die Basisstation auf. Die Ortsbestimmungseinheit kann beispielsweise ein Navigationsempfänger zum Empfangen von Ortungssignalen von Satelliten, von WLAN-Systemen und/oder von Zellularfunksystemen oder von anderen Ortungssignalgebern sein.

Aus DE 10 2011 116 245 A1 ist ein Verfahren zur Ermittlung aktueller Streckeninformationen einer digitalen Karte bekannt. Dabei werden von mehreren Fahrzeugen mittels eines Sensors Sensordaten aufgenommen, die innerhalb des Fahrzeugs zu Streckenabschnitten zugeordnet und als Einzelstreckeninformation ausgewertet werden. Diese Informationen werden an eine zentrale Datenverwaltungseinrichtung übermittelt, die durch Plausibilisierung sich entsprechender Einzelstreckeninformationen verschiedener Fahrzeuge gegeneinander in die digitale Karte aufzunehmende und/oder in der digitalen Karte zu ersetzende Streckeninformationen auswählt und die digitale Karte aktualisiert.

Es ist daher eine Aufgabe der vorliegenden Erfindung, ein verbessertes Verfahren zum Betreiben eines höher automatisierten Fahrzeugs (HAF), insbesondere eines hochautomatisierten Fahrzeugs und ein verbessertes Fahrerassistenzsystem zur Steuerung eines höher automatisierten Fahrzeugs (HAF), insbesondere eines hochautomatisierten Fahrzeugs bereitzustellen, bei dem Streckenänderungen gegenüber einem in einer digitalen Karte abgespeicherten Streckenstatus, kurz auch Kartenfehler genannt, frühzeitig und robust erkannt werden können.

### Offenbarung der Erfindung

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Betreiben eines höher automatisierten Fahrzeugs (HAF), insbesondere eines hochautomatisierten Fahrzeugs bereitgestellt, umfassend die folgenden Schritte:
- S1: zur Verfügung stellen einer digitalen Karte, vorzugsweise einer hochgenauen digitalen Karte, in einem Fahrerassistenzsystem des HAF;
- S2: Bestimmung einer aktuellen Fahrzeugposition und Lokalisierung der Fahrzeugposition in der digitalen Karte;
- S3: zur Verfügung stellen einer erwarteten Soll-Verkehrsdichte an der Fahrzeugposition;
- S4: Ermittlung einer aktuellen Ist-Verkehrsdichte in einem Umfeld des HAF;
- S5: Vergleich der Ist-Verkehrsdichte mit der Soll-Verkehrsdichte und Ermittlung eines Differenzwertes als Ergebnis des Vergleichs;
- S6: Plausibilisierung der Fahrzeugposition des HAF zumindest teilweise anhand des.

Vorteilhafterweise beinhaltet der Schritt der Plausibilisierung, dass in dem Fall, dass der Differenzwert einen festgelegten Schwellwert einer Abweichung überschreitet, der Schritt S2 der Bestimmung der aktuellen Fahrzeugposition und Lokalisierung der Fahrzeugposition in der digitalen Karte wiederholt wird.

In einer weiteren Ausführungsform beinhaltet der Schritt S3, dass die Soll-Verkehrsdichte in Form einer Verkehrsdichtekarte zur Verfügung gestellt wird, wobei die Verkehrsdichtekarte insbesondere eine zu erwartende Verkehrsdichte an unterschiedlichen Orten in Abhängigkeit von zumindest einem der Parameter Tageszeit, Jahreszeit, Wetterbedingungen enthält, und wobei die Verkehrsdichtekarte insbesondere Teil der digitalen Karte ist.

Bevorzugterweise wird die Verkehrsdichtekarte dadurch gewonnen, dass über bestimmte Zeiträume Informationen betreffend Verkehrsdichten an unterschiedlichen Orten durch die unterschiedlichen Orte passierende höher automatisierte Fahrzeuge gesammelt werden..

Auf diese Art und Weise kann über statistische Auswertungen eine Verkehrsdichtekarte mit Soll-Verkehrsdichten zu verschiedenen Tages- und Nachtzeiten sowie zu unterschiedlichen Jahreszeiten abgeleitet werden.

Vorteilhafterweise beinhaltet der Schritt S4, dass die aktuelle Ist-Verkehrsdichte in dem Umfeld des HAF durch zumindest einen in das HAF integrierten Sensor oder durch zumindest einen externen Sensor erfolgt, wobei der zumindest eine externe Sensor insbesondere an einer Lichtsignalanlage, an einer Laterne, an einem Straßenschild und/oder an einem weiteren HAF angeordnet ist.

Somit kann die aktuelle Ist-Verkehrsdichte in dem Umfeld des HAF mit Hilfe eines externen Sensors, beispielsweise einer Kamera, in einer Umgebung des weiteren Fahrzeugs erfasst und an das HAF übertragen werden. Die aktuelle Ist-Verkehrsdichte wird dann einem Fahrerassistenzsystem des Fahrzeugs bereitgestellt.

Einen weiteren Gegenstand der vorliegenden Erfindung bildet ein Fahrerassistenzsystem zur Steuerung eines höher automatisierten Fahrzeugs (HAF), insbesondere eines hochautomatisierten Fahrzeugs. Dabei umfasst das Fahrerassistenzsystem zumindest einen Sensor, der dazu eingerichtet ist, weitere Fahrzeuge in einem Umfeld des HAF zu erfassen. Ferner weist das Fahrerassistenzsystem ein Speichermodul zur Speicherung einer digitalen Karte, vorzugsweise einer hochgenauen digitalen Karte, ein Positionsmodul zur Bestimmung einer Fahrzeugposition des HAF, und eine Steuervorrichtung auf. Dabei ist das Speichermodul insbesondere ein in das HAF integriertes Speichermodul oder ein zentraler Server und das Positionsmodul vorzugsweise ein GPS-Modul. Ferner ist die Steuervorrichtung dazu eingerichtet, Daten mit dem Sensor, dem Speichermodul, und dem Positionsmodul auszutauschen und die durch das Positionsmodul bestimmte Fahrzeugposition in der digitalen Karte zu lokalisieren. Erfindungsgemäß ist vorgesehen, dass die Steuervorrichtung des Weiteren dazu eingerichtet ist, anhand der von dem Sensor empfangenen Daten eine Ist-Verkehrsdichte in der Umgebung des HAF zu bestimmen, die Ist-Verkehrsdichte mit einer an der Fahrzeugposition erwarteten Soll-Verkehrsdichte zu vergleichen, und als Ergebnis dieses Vergleichs einen Differenzwert zu ermitteln.
- Die Steuervorrichtung ist dazu eingerichtet, eine Plausibilisierung der Fahrzeugposition des HAF zumindest teilweise anhand des Differenzwertes durchzuführen.

Ferner ist die Steuervorrichtung in einer weiteren Ausführungsform dazu eingerichtet, in dem Fall, dass der Differenzwert einen festgelegten Schwellwert einer Abweichung überschreitet, eine erneute Bestimmung und Lokalisierung der Fahrzeugposition in der digitalen Karte zu veranlassen beziehungsweise durchzuführen.

Die erneute Bestimmung und Lokalisierung der Fahrzeugposition in der digitalen Karte kann beispielsweise an einen zentralen Server übermittelt werden, um serverseitig eine aktuelle und genauere digitale Straßenkarte der Umgebung des Fahrzeugs bereitzustellen, welche auch von weiteren HAFs abgerufen und verwendet werden kann.

Nach einer Ausführungsform enthält das Speichermodul die Soll-Verkehrsdichte in Form einer Verkehrsdichtekarte, wobei die Verkehrsdichtekarte insbesondere eine zu erwartende Verkehrsdichte an unterschiedlichen Orten in Abhängigkeit von zumindest einem der Parameter Tageszeit, Jahreszeit, Wetterbedingungen enthält, und wobei die Verkehrsdichtekarte insbesondere Teil der digitalen Karte ist.

Vorteilhafterweise ist der zumindest eine Sensor ein in das HAF integrierter Sensor oder zumindest ein externer Sensor, wobei der zumindest eine externe Sensor insbesondere an einer Lichtsignalanlage, an einer Laterne, an einem Straßenschild und/oder an einem weiteren HAF angeordnet ist.

In einer besonders vorteilhaften Ausgestaltung basiert der zumindest eine Sensor auf einer der Bauweisen Video, Stereo Video, 3D Kamera, Surround Kamera, ToF, Lidar, Radar, Ultraschall oder GPS.

Einen weiteren Gegenstand der vorliegenden Erfindung bildet ein Computerprogramm, welches einen Programmcode zur Durchführung des erfindungsgemäßen Verfahrens umfasst, wenn das Computerprogramm auf einem Computer ausgeführt wird.

Obwohl die vorliegende Erfindung im Folgenden hauptsächlich in Zusammenhang mit Personenkraftwagen beschrieben wird, ist sie darauf nicht beschränkt, sondern kann mit jeder Art von Fahrzeug, etwa Lastkraftfahrzeug (LKW) und/oder Personenkraftwagen (PKW) genutzt werden.

Weitere Merkmale, Anwendungsmöglichkeiten und Vorteile der Erfindung ergeben sich aus der nachfolgenden Beschreibung der Ausführungsbeispiele der Erfindung, welche in der Figur dargestellt ist. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand eines bevorzugten Ausführungsbeispiels näher erläutert, wobei für gleiche Merkmale gleiche Bezugszeichen verwendet werden. Die Zeichnung ist schematisch und zeigt:

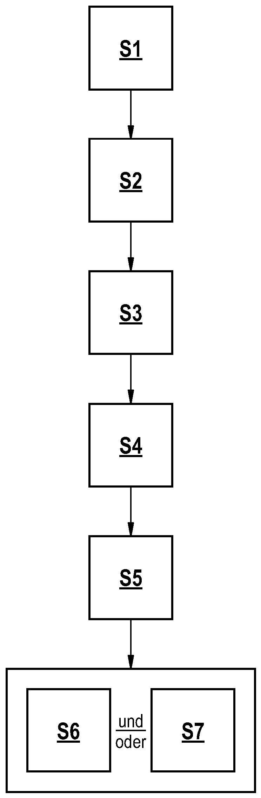

- Fig. 1: ein Ablaufschema einer Ausführungsform des erfindungsgemäßen Verfahrens.

Figur 1 zeigt ein Ablaufschema einer Ausführungsform des erfindungsgemäßen Verfahrens zum Betreiben eines höher automatisierten Fahrzeugs (HAF), insbesondere eines hochautomatisierten Fahrzeugs.

Ein zum Zwecke der Steuerung des höher automatisierten Fahrzeugs (HAF) in dem höher automatisierten Fahrzeug (HAF) angeordnetes Fahrerassistenzsystem umfasst zumindest einen Sensor, der dazu eingerichtet ist, weitere Fahrzeuge in einem Umfeld des HAF zu erfassen. Ferner weist das Fahrerassistenzsystem ein Speichermodul zur Speicherung einer digitalen Karte, vorzugsweise einer hochgenauen digitalen Karte, ein Positionsmodul zur Bestimmung einer Fahrzeugposition des HAF und eine Steuervorrichtung auf. Dabei ist das Speichermodul insbesondere ein in das HAF integriertes Speichermodul oder ein zentraler Server und das Positionsmodul vorzugsweise ein GPS-Modul. Ferner ist die Steuervorrichtung dazu eingerichtet, Daten mit dem Sensor, dem Speichermodul, und dem Positionsmodul auszutauschen und die durch das Positionsmodul bestimmte Fahrzeugposition in der digitalen Karte zu lokalisieren.

In einem ersten Schritt S1 wird in an sich bekannter Weise dem Fahrerassistenzsystem des HAFs eine digitale Karte, vorzugsweise eine hochgenaue digitale Karte zur Verfügung gestellt.

In einem Schritt S2 erfolgt eine an sich bekannte Bestimmung einer aktuellen Fahrzeugposition und Lokalisierung der Fahrzeugposition in der digitalen Karte.

In einem Schritt S3 wird eine erwartete Soll-Verkehrsdichte an der Fahrzeugposition zur Verfügung gestellt, wobei die Soll-Verkehrsdichte in Form einer Verkehrsdichtekarte zur Verfügung gestellt wird, und wobei die Verkehrsdichtekarte insbesondere eine zu erwartende Verkehrsdichte an unterschiedlichen Orten in Abhängigkeit von zumindest einem der Parameter Tageszeit, Jahreszeit, Wetterbedingungen enthält. Dabei ist die Verkehrsdichtekarte insbesondere Teil der digitalen Karte.

Grundsätzlich kann die Verkehrsdichtekarte dadurch gewonnen werden, dass über bestimmte Zeiträume Informationen betreffend Verkehrsdichten an unterschiedlichen Orten durch die unterschiedlichen Orte passierende höher automatisierte Fahrzeuge gesammelt werden.

Auf diese Art und Weise kann über statistische Auswertungen eine Verkehrsdichtekarte mit Soll-Verkehrsdichten zu verschiedenen Tages- und Nachtzeiten sowie zu unterschiedlichen Jahreszeiten abgeleitet werden.

In Schritt S4 wird eine aktuelle Ist-Verkehrsdichte in einem Umfeld des HAF durch zumindest einen in das HAF integrierten Sensor oder durch zumindest einen externen Sensor ermittelt, wobei der zumindest eine externe Sensor insbesondere an einer Lichtsignalanlage, an einer Laterne, an einem Straßenschild und/oder an einem weiteren HAF angeordnet ist. Auf diese Weise kann die aktuelle Ist-Verkehrsdichte in dem Umfeld des HAF mit Hilfe eines externen Sensors beispielsweise einer Kamera in einer Umgebung des weiteren Fahrzeugs erfasst und zu dem HAF übertragen werden. Die aktuelle Ist-Verkehrsdichte wird dann dem Fahrerassistenzsystem des Fahrzeugs bereitgestellt und gegebenenfalls auch dem Fahrer des HAFs angezeigt.

Bevorzugterweise basiert der zumindest eine Sensor auf einer der Bauweisen Video, Stereo Video, 3D Kamera, Surround Kamera, ToF, Lidar, Radar, Ultraschall oder GPS.

In einem weiteren fünften Schritt S5 wird die Ist-Verkehrsdichte mit der Soll-Verkehrsdichte verglichen und ein Differenzwert als Ergebnis des Vergleichs ermittelt. Vorrichtungsseitig geschieht dies durch die Steuervorrichtung des Fahrerassistenzsystems.

Bevorzugterweise ist vorgesehen, dass ein zentraler Kartenserver die Information der Höhe des Differenzwerts und/oder die Ist-Verkehrsdichte betreffend seitens der Steuervorrichtung übermittelt bekommt und an weitere höher automatisierte Fahrzeuge übermittelt, wobei diese Übermittlung vorzugsweise in Form eines Karten-Update der Verkehrsdichtekarte und/oder der digitalen Karte erfolgt. Vorrichtungsseitig ist die Steuervorrichtung also zur Übermittlung der Information die Höhe des Differenzwerts und/oder die Ist-Verkehrsdichte betreffend an den zentralen Kartenserver eingerichtet.

Der in Figur 1 gezeigte Schritt S6 kann alternativ oder zusätzlich zu einem Schritt 7 erfolgen und beinhaltet die Plausibilisierung der Fahrzeugposition des HAF zumindest teilweise anhand des Differenzwertes, wobei die vorrichtungsseitig die Steuervorrichtung dazu eingerichtet ist, diese Plausibilisierung der Fahrzeugposition des HAF zumindest teilweise anhand des Differenzwertes durchzuführen. Der Schritt der Plausibilisierung kann beinhalten, dass in dem Fall, dass der Differenzwert einen festgelegten Schwellwert einer Abweichung überschreitet, der Schritt S2 der Bestimmung der aktuellen Fahrzeugposition und Lokalisierung der Fahrzeugposition in der digitalen Karte wiederholt wird. Die Steuervorrichtung sendet in diesem Fall eine entsprechende Aufforderung an das Positionsmodul.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Verfahren zum Betreiben eines höher automatisierten Fahrzeugs (HAF), insbesondere eines hochautomatisierten Fahrzeugs, umfassend die Schritte:
S1 zur Verfügung stellen einer digitalen Karte, vorzugsweise einer hochgenauen digitalen Karte, in einem Fahrerassistenzsystem des HAF;
S2 Bestimmung einer aktuellen Fahrzeugposition und Lokalisierung der Fahrzeugposition in der digitalen Karte;
S3 zur Verfügung stellen einer erwarteten Soll-Verkehrsdichte an der Fahrzeugposition;
S4 Ermittlung einer aktuellen Ist-Verkehrsdichte in einem Umfeld des HAF ;
S5 Vergleich der Ist-Verkehrsdichte mit der Soll-Verkehrsdichte und Ermittlung eines Differenzwertes als Ergebnis des Vergleichs;
**dadurch gekennzeichnet, dass** das Verfahren den weiteren Schritt umfasst:
S6 Plausibilisierung der Fahrzeugposition des HAF zumindest teilweise anhand des Differenzwertes

2. Verfahren nach Anspruch 1, **dadurch gekennzeichnet, dass** der Schritt der Plausibilisierung beinhaltet, dass in dem Fall, dass der Differenzwert einen festgelegten Schwellwert einer Abweichung überschreitet, der Schritt S2 der Bestimmung der aktuellen Fahrzeugposition und Lokalisierung der Fahrzeugposition in der digitalen Karte wiederholt wird.

3. Verfahren nach einem der vorstehenden Ansprüche, **dadurch gekennzeichnet, dass** der Schritt S3 beinhaltet, dass die Soll-Verkehrsdichte in Form einer Verkehrsdichtekarte zur Verfügung gestellt wird, wobei die Verkehrsdichtekarte insbesondere eine zu erwartende Verkehrsdichte an unterschiedlichen Orten in Abhängigkeit von zumindest einem der Parameter Tageszeit, Jahreszeit, Wetterbedingungen enthält, und wobei die Verkehrsdichtekarte insbesondere Teil der digitalen Karte ist.

4. Verfahren nach Anspruch 3, **dadurch gekennzeichnet, dass** die Verkehrsdichtekarte dadurch gewonnen wird, dass über bestimmte Zeiträume Informationen betreffend Verkehrsdichten an unterschiedlichen Orten durch die unterschiedlichen Orte passierende höher automatisierte Fahrzeuge gesammelt werden.

5. Verfahren nach einem der vorstehenden Ansprüche, **dadurch gekennzeichnet, dass** der Schritt S4 beinhaltet, dass die aktuelle Ist-Verkehrsdichte in dem Umfeld des HAF durch zumindest einen in das HAF integrierten Sensor oder durch zumindest einen externen Sensor erfolgt, wobei der zumindest eine externe Sensor insbesondere an einer Lichtsignalanlage, an einer Laterne, an einem Straßenschild und/oder an einem weiteren HAF angeordnet ist.

6. Fahrerassistenzsystem zur Steuerung eines höher automatisierten Fahrzeugs (HAF), insbesondere eines hochautomatisierten Fahrzeugs, umfassend
• zumindest einen Sensor, der dazu eingerichtet ist, weitere Fahrzeuge in einem Umfeld des HAF zu erfassen;
• ein Speichermodul zur Speicherung einer digitalen Karte, vorzugsweise einer hochgenauen digitalen Karte, wobei das Speichermodul insbesondere ein in das HAF integriertes Speichermodul oder ein zentraler Server ist;
• ein Positionsmodul zur Bestimmung einer Fahrzeugposition des HAF, wobei das Positionsmodul vorzugsweise ein GPS-Modul ist;
• eine Steuervorrichtung, die dazu eingerichtet ist, Daten mit dem Sensor, dem Speichermodul, und dem Positionsmodul auszutauschen und die ferner dazu eingerichtet ist, die durch das Positionsmodul bestimmte Fahrzeugposition in der digitalen Karte zu lokalisieren,
wobei
die Steuervorrichtung des Weiteren dazu eingerichtet ist, anhand der von dem Sensor empfangenen Daten eine Ist-Verkehrsdichte in der Umgebung des HAF zu bestimmen, die Ist-Verkehrsdichte mit einer an der Fahrzeugposition erwarteten Soll-Verkehrsdichte zu vergleichen, und als Ergebnis dieses Vergleichs einen Differenzwert zu ermitteln,
**dadurch gekennzeichnet, dass**
die Steuervorrichtung dazu eingerichtet ist, eine Plausibilisierung der Fahrzeugposition des HAF zumindest teilweise anhand des Differenzwertes durchzuführen

7. Fahrerassistenzsystem nach Anspruch 6, **dadurch gekennzeichnet, dass** die Steuervorrichtung dazu eingerichtet ist, in dem Fall, dass der Differenzwert einen festgelegten Schwellwert einer Abweichung überschreitet, eine erneute Bestimmung und Lokalisierung der Fahrzeugposition in der digitalen Karte zu veranlassen beziehungsweise durchzuführen.

8. Fahrerassistenzsystem nach einem der Ansprüche 6 oder 7, **dadurch gekennzeichnet, dass** das Speichermodul die Soll-Verkehrsdichte in Form einer Verkehrsdichtekarte enthält, wobei die Verkehrsdichtekarte insbesondere eine zu erwartende Verkehrsdichte an unterschiedlichen Orten in Abhängigkeit von zumindest einem der Parameter Tageszeit, Jahreszeit, Wetterbedingungen enthält, und wobei die Verkehrsdichtekarte insbesondere Teil der digitalen Karte ist.

9. Fahrerassistenzsystem nach einem der Ansprüche 6 bis 8, **dadurch gekennzeichnet, dass** der zumindest eine Sensor ein in das HAF integrierter Sensor oder zumindest ein externer Sensor ist, wobei der zumindest eine externe Sensor insbesondere an einer Lichtsignalanlage, an einer Laterne, an einem Straßenschild und/oder an einem weiteren HAF angeordnet ist.

10. Fahrerassistenzsystem nach einem der Ansprüche 6 bis 9, **dadurch gekennzeichnet, dass** der zumindest eine Sensor auf einer der folgenden Bauweisen basiert:
Video, Stereo Video, 3D Kamera, Surround Kamera, ToF, Lidar, Radar, Ultraschall, GPS.

11. Computerprogramm, umfassend Programmcode zur Durchführung des Verfahrens nach einem der Ansprüche 1 bis 5, wenn das Computerprogramm auf einem Computer ausgeführt wird.

## Claims

1. Method for operating a more highly automated vehicle, in particular a highly automated vehicle, comprising the steps of:
S1 providing a digital map, preferably a highly accurate digital map, in a driver assistance system of the more highly automated vehicle;
S2 determining a current vehicle position and locating the vehicle position in the digital map;
S3 providing an expected target traffic density at the vehicle position;
S4 determining a current actual traffic density in an environment of the more highly automated vehicle;
S5 comparing the actual traffic density with the target traffic density and determining a difference value as the result of the comparison;
**characterized in that** the method comprises the further step of:
S6 checking the plausibility of the vehicle position of the more highly automated vehicle at least partially on the basis of the difference value.

2. Method according to Claim 1, **characterized in that** the plausibility-checking step comprises repeating step S2 of determining the current vehicle position and locating the vehicle position in the digital map if the difference value exceeds a stipulated threshold value of a deviation.

3. Method according to one of the preceding claims, **characterized in that** step S3 comprises providing the target traffic density in the form of a traffic density map, wherein the traffic density map contains, in particular, an expected traffic density at different locations on the basis of at least one of the parameters of time of day, season, weather conditions, and wherein the traffic density map is, in particular, part of the digital map.

4. Method according to Claim 3, **characterized in that** the traffic density map is obtained by collecting information relating to traffic densities at different locations over particular periods by means of more highly automated vehicles which pass the different locations.

5. Method according to one of the preceding claims, **characterized in that** step S4 comprises the current actual traffic density in the environment of the more highly automated vehicle being effected by means of at least one sensor integrated in the more highly automated vehicle or by means of at least one external sensor, wherein the at least one external sensor is arranged, in particular, on a traffic light system, a streetlamp, a road sign and/or a further more highly automated vehicle.

6. Driver assistance system for controlling a more highly automated vehicle, in particular a highly automated vehicle, comprising
• at least one sensor which is configured to detect further vehicles in an environment of the more highly automated vehicle;
• a storage module for storing a digital map, preferably a highly accurate digital map, wherein the storage module is, in particular, a storage module integrated in the more highly automated vehicle or a central server;
• a position module for determining a vehicle position of the more highly automated vehicle, wherein the position module is preferably a GPS module;
• a control apparatus which is configured to interchange data with the sensor, the storage module and the position module and is also configured to locate the vehicle position determined by the position module in the digital map,
wherein
the control apparatus is also configured to determine an actual traffic density in the environment of the more highly automated vehicle on the basis of the data received from the sensor, to compare the actual traffic density with a target traffic density expected at the vehicle position and to determine a difference value as the result of this comparison,
**characterized in that**
the control apparatus is configured to check the plausibility of the vehicle position of the more highly automated vehicle at least partially on the basis of the difference value.

7. Driver assistance system according to Claim 6, **characterized in that** the control apparatus is configured to initiate or carry out renewed determination and localization of the vehicle position in the digital map if the difference value exceeds a stipulated threshold value of a deviation.

8. Driver assistance system according to either of Claims 6 and 7, **characterized in that** the storage module contains the target traffic density in the form of a traffic density map, wherein the traffic density map contains, in particular, an expected traffic density at different locations on the basis of at least one of the parameters of the time of day, season, weather conditions, and wherein the traffic density map is, in particular, part of the digital map.

9. Driver assistance system according to one of Claims 6 to 8, **characterized in that** the at least one sensor is a sensor integrated in the more highly automated vehicle or at least one external sensor, wherein the at least one external sensor is arranged, in particular, on a traffic light system, a streetlamp, a road sign and/or a further more highly automated vehicle.

10. Driver assistance system according to one of Claims 6 to 9, **characterized in that** the at least one sensor is based on one of the following designs:
video, stereo video, 3D camera, surround camera, ToF, lidar, radar, ultrasound, GPS.

11. Computer program comprising program code for carrying out the method according to one of Claims 1 to 5 when the computer program is executed on a computer.

## Revendications

1. Procédé de fonctionnement d'un véhicule à automatisation évolué (HAF), en particulier d'un véhicule hautement automatisé, ledit procédé comprenant les étapes suivantes :
S1 fournir une carte numérique, de préférence une carte numérique de haute précision, dans un système d'assistance à la conduite du véhicule HAF ;
S2 déterminer une position actuelle du véhicule et localiser la position du véhicule sur la carte numérique ;
S3 fournir une densité de trafic cible attendue à la position du véhicule ;
S4 déterminer une densité de trafic réelle actuelle dans l'environnement du véhicule HAF ;
S5 comparer la densité de trafic réelle avec la densité de trafic cible et déterminer une valeur de différence comme résultat de la comparaison ;
**caractérisé en ce que** le procédé comprend l'étape supplémentaire suivante :
S6 vérifier la vraisemblance de la position du véhicule HAF au moins partiellement sur la base de la valeur de différence.

2. Procédé selon la revendication 1, **caractérisé en ce que** l'étape de vérification de la plausibilité comprend la répétition de l'étape S2 de détermination de la position actuelle du véhicule et de localisation de la position du véhicule sur la carte numérique si la valeur de différence devient supérieure à une valeur seuil spécifiée d'un écart.

3. Procédé selon l'une des revendications précédentes, **caractérisé en ce que** l'étape S3 comprend la fourniture de la densité de trafic cible sous la forme d'une carte de densité de trafic, la carte de densité de trafic contenant notamment une densité de trafic attendue à différents endroits en fonction d'au moins un des paramètres heure de la journée, époque de l'année, conditions météorologiques, et en particulier la carte de densité de trafic faisant partie de la carte numérique.

4. Procédé selon la revendication 3, **caractérisé en ce que** la carte de densité de trafic est obtenue par collecte d'informations relatives aux densités de trafic à différents endroits à des intervalles de temps déterminés par le biais des véhicules à automatisation évolués passant par les différents endroits.

5. Procédé selon l'une des revendications précédentes, **caractérisé en ce que** l'étape S4 comprend la détermination de la densité de trafic réelle actuelle dans l'environnement du véhicule HAF par le biais d'au moins un capteur intégré dans le véhicule HAF ou d'au moins un capteur externe, l'au moins un capteur externe étant en particulier disposé sur un feu de circulation, un réverbère, un panneau de signalisation et/ou un autre véhicule HAF.

6. Système d'aide à la conduite destiné à commander un véhicule à automatisation évoluée (HAF), en particulier d'un véhicule hautement automatisé, ledit système comprenant
• au moins un capteur conçu pour détecter d'autres véhicules dans l'environnement du véhicule HAF ;
• un module de mémorisation destiné à mémoriser une carte numérique, de préférence une carte numérique de haute précision, le module de mémorisation étant notamment un module de mémorisation intégré dans le véhicule HAF ou un serveur central ;
• un module de position destiné à déterminer une position du véhicule HAF, le module de position étant de préférence un module GPS ;
• un dispositif de commande qui est conçu pour échanger des données avec le capteur, le module de mémorisation et le module de position et qui est conçu en outre pour localiser la position du véhicule déterminée par le module de position sur la carte numérique,
le dispositif de commande étant en outre conçu pour déterminer à l'aide de données reçues du capteur une densité de trafic réelle dans l'environnement du véhicule HAF, comparer la densité de trafic réelle à une densité de trafic cible attendue à la position du véhicule, et déterminer une valeur de la différence comme résultat de cette comparaison,
**caractérisé en ce que**
le dispositif de commande est conçu pour effectuer une vérification de vraisemblance de la position du véhicule HAF au moins partiellement sur la base de la valeur de différence.

7. Système d'aide à la conduite selon la revendication 6, **caractérisé en ce que** le dispositif de commande est conçu pour ordonner ou effectuer une nouvelle détermination et localisation de la position du véhicule sur la carte numérique si la valeur de différence devient supérieure à une valeur seuil déterminée d'un écart.

8. Système d'aide à la conduite selon l'une des revendications 6 et 7, **caractérisé en ce que** le module de mémorisation contient la densité de trafic cible sous la forme d'une carte de densité de trafic, la carte de densité de trafic étant notamment une densité de trafic attendue à différents endroits en fonction d'au moins un des paramètres heure de la journée, époque de l'année, conditions météorologiques, et la carte de densité de trafic faisant notamment partie de la carte numérique.

9. Système d'aide à la conduite selon l'une des revendications 6 à 8, **caractérisé en ce que** l'au moins un capteur est un capteur intégré dans le véhicule HAF ou au moins un capteur externe, l'au moins un capteur externe étant disposé notamment sur un feu de circulation, un réverbère, un panneau de signalisation et/ou un autre véhicule HAF.

10. Système d'aide à la conduite selon l'une des revendications 6 à 9, **caractérisé en ce que** l'au moins un capteur est basé sur l'un des types suivants :
vidéo, vidéo stéréo, caméra 3D, caméra Surround, ToF, Lidar, Radar, Ultrason, GPS.

11. Logiciel, comprenant un code de programme destiné à mettre en oeuvre le procédé selon l'une des revendications 1 à 5, lorsque le logiciel est exécuté sur un ordinateur.
